# FASCICULE DE BREVET EUROPEEN

(11) **EP 3 510 335 B1**
(45) Date de publication et mention de la délivrance du brevet: **10.03.2021**
(21) Numéro de dépôt: 17758238.4
(22) Date de dépôt: 04.08.2017
(51) Int. Cl.: F28F 9/00, B60K 11/04, F28D 21/00

(54) **ASSEMBLAGE POUR LE SUPPORT AVEC FILTRAGE DE VIBRATIONS D'UN ÉLÉMENT FONCTIONNEL SUR UN ÉLÉMENT STRUCTUREL DU CORPS D'UN ENGIN ET ÉLÉMENT FONCTIONNEL Y RELATIF**
ANORDNUNG ZUR UNTERSTÜTZUNG, MIT FILTRATION VON SCHWINGUNGEN, EINES FUNKTIONALEN ELEMENTS AUF EINEM STRUKTURELLEN ELEMENT DER KAROSSERIE EINES FAHRZEUGS UND ENTSPRECHENDES FUNKTIONALES ELEMENT
ASSEMBLY FOR SUPPORTING, WITH FILTRATION OF VIBRATIONS, A FUNCTIONAL ELEMENT ON A STRUCTURAL ELEMENT OF THE BODY OF A CRAFT, AND RELATED FUNCTIONAL ELEMENT

(30) Priorité: 07.09.2016 FR 1658312
(43) Date de publication de la demande: 17.07.2019
(73) Titulaire: SumiRiko SD France S.A.S., 58300 Decize (FR)
(72) Inventeur: SENNEPIN, Sébastien, 58390 Dornes (FR); RENARD, Franck, 58000 Saint Eloi (FR); SKIERA, Jean-François, 58340 Cercy La Tour (FR)
(74) Mandataire: Ernest Gutmann - Yves Plasseraud S.A.S.
(86) Numéro de dépôt international: PCT/FR2017/052200
(87) Numéro de publication internationale: WO 2018/046814

(56) Documents cités:
- EP-A2- 2 161 529
- WO-A1-2014/140478
- FR-A3- 2 944 769
- US-A1- 2007 137 845

## Description

L'invention concerne le domaine de l'assemblage pour - à l'état monté - le support avec filtrage de vibrations d'un élément fonctionnel suivant la revendication 1, - comme étant ou comprenant un ventilateur, un échangeur de chaleur, un condenseur - sur un élément structurel rigide du corps d'un engin - comme un appareil ou un véhicule à moteur -, qui comprend deux ensembles d'assemblage analogues, écartés l'un de l'autre le long de l'élément structurel et de la partie basse de l'élément fonctionnel.

Plus précisément, l'invention a pour objet un tel assemblage, une cassette d'appui et de filtrage de vibrations

Le document EP 2 161 529 décrit un élément support servant d'appui élastique d'au moins un échangeur de chaleur dans un véhicule automobile, comprenant un élément formant cadre et un élément d'appui élastique comportant une ouverture pour le logement d'un tourillon support disposé côté échangeur de chaleur, où l'élément d'appui élastique est assemblé avec l'élément formant cadre, par complémentarité de forme, dans la direction longitudinale du tourillon d'appui, où l'élément d'appui comprend un élément élastique en matériau élastomère, où l'élément d'appui comprend une enveloppe qui peut être insérée, par complémentarité de forme , dans l'élément formant cadre, où l'élément d'appui qui comprend un coussinet, l'enveloppe et l'élément élastique, est moulé par injection comme une pièce à deux composants. Dans la réalisation selon ce document, le coussinet et l'enveloppe, qui se composent d'une matière plastique dure, sont moulés par injection sur l'élément élastique.

Un élément support selon le document EP 2 161 529 ne permet pas de réaliser un assemblage qui permette de rattraper des dispersions longitudinales substantielles.

Tel est le problème à la base de l'invention.

Le document US2007/137845 décrit un ensemble d'échangeur de chaleur comprenant un dispositif de transfert de chaleur, au moins un composant comprenant un matériau souple pour fournir une fonction d'étanchéité, et au moins un revêtement de surface sur au moins un composant, dans lequel le matériau flexible est pourvu d'un revêtement de surface.

Le document FR 2 953 774 décrit un assemblage de fixation d'un échangeur de chaleur de véhicule automobile, tel qu'un radiateur ou un refroidisseur d'air, dans lequel l'échangeur de chaleur est monté sur deux traverses inférieure et supérieure avec des moyens de fixation au moins en partie élastique pour réduire la transmission des vibrations, constitués de logements ménagés dans l'échangeur destinés à recevoir des plots portés par les traverses.

Le document FR 2 822 125 décrit un assemblage inverse avec un plot filtrant en élastomère souple naturel ou synthétique monté par emboîtement élastique dans un trou d'une traverse support en forme de plaque, par insertion de cette plaque dans une rainure périphérique du plot. Le plot est immobilisé par rapport à la plaque et comporte un trou central dans lequel est monté un insert de fixation solidaire du radiateur.

Le document US 2005/0284868 décrit un plot filtrant en caoutchouc monobloc, monté dans un trou d'insertion d'une traverse, comportant un trou de réception d'un insert saillant sous le radiateur qui repose par sa face inférieure sur la face supérieure du plot pourvu de saillies et de cavités. Le document US 5 651 839 décrit une structure analogue.

Le document US 5 758 860 décrit un support de radiateur capable d'absorber les déplacements verticaux par la déformation verticale d'un élément déformable en caoutchouc interposé entre un tube rigide intérieur et un tube rigide extérieur.

Contrairement aux documents précédents, les documents WO 2014/140478 et FR 2 944 769 posent le problème du rattrapage des dispersions longitudinales. On entend par là les écarts dimensionnels entre les parties devant être assemblées, du fait des tolérances de fabrication, dans la mesure où l'assemblage comprend deux ensembles d'assemblage analogues, écartés l'un de l'autre le long de l'élément structurel et de la partie basse de l'élément fonctionnel.

Le document WO 2014/140478 décrit un ensemble de refroidissement apte à être fixé à un élément d'une structure de caisse de véhicule automobile comportant des moyens de fixation inférieurs par basculement et des moyens de fixation supérieurs par encliquetage qui comportent des moyens de rattrapage des dispersions de fabrication selon les directions longitudinale, transversale et verticale.

Le document FR 2 944 769 décrit un élément élastique déformable d'appui et de filtrage de vibrations monobloc en matériau type caoutchouc ayant une partie centrale pourvue d'un alésage, une partie périphérique, et une liaison autorisant un déplacement élastique.

L'état de la technique comprend également les documents US 4 651 839, FR 2 822 760, EP 1 067 005 et EP 1 354 745.

Il résulte de l'ensemble de ces documents qu'au regard de l'assemblage avec l'élément structurel, l'élément fonctionnel est pourvu de pions ou analogues, sans être spécialement adapté aux moyens constitutifs de l'assemblage.

L'invention vise donc à proposer un élément fonctionnel qui soit spécialement adapté aux moyens constitutifs d'un assemblage apte à rattraper des dispersions longitudinales substantielles.

L'invention vise également à atteindre cet objectif de manière telle que l'assemblage, dans une réalisation particulière, offre une grande flexibilité, pouvant accueillir aussi des éléments fonctionnels conventionnels du type à pions, maintenus assemblés au moyen d'inserts distinct d'eux et, le cas échéant, d'une pièce de verrouillage.

L'invention vise aussi à permettre de mettre en oeuvre un outil de déverrouillage des moyens complémentaires d'immobilisation de l'élément fonctionnel.

Ci-après, un exposé de l'invention.

Selon un premier aspect, l'invention a pour objet un assemblage pour - à l'état monté - le support avec filtrage de vibrations d'un élément fonctionnel, suivant l'objet de la revendication 1.

Selon une réalisation, l'insert, d'axe de troisième direction, a une face extérieure coopérant avec la face intérieure de la cavité du noyau central, l'insert étant supporté par une âme rigide du noyau central grâce à des faces d'appui conjuguées prévues respectivement sur la face extérieure de l'insert et sur la face intérieure de la partie centrale creuse de l'âme rigide.

Selon une réalisation, l'insert, est immobilisé par rapport à une âme rigide du noyau central grâce à des moyens complémentaires d'immobilisation, comme des ergots ou des dents et des lumières, décrochements, saillies, prévus sur l'insert et l'âme rigide. Selon une réalisation, les moyens d'immobilisation prévus sur prévus sur l'insert et l'âme rigide sont de type à déformation élastique pour le montage et pour le déverrouillage.

Selon une réalisation, la gaine comprend une paroi basse pourvue d'une lumière basse, le fourreau comprend une paroi basse pourvue d'un passage bas homologue de la lumière basse, la cavité est ouverte de part en part avec une ouverture haute et une ouverture basse.

Selon une réalisation, la cassette est immobilisée en position par contact sur la gaine avec des zones complémentaires conjuguées de la cassette et de la gaine comprenant des parties saillantes et/ou des parties découpées conjuguées.

Selon une réalisation, vus dans la troisième direction, l'ouverture haute de la cavité de l'élément intérieur et l'insert ont, des contours situés au droit et de dimensions plus petites que le contour du passage haut qui lui-même a un contour situé au droit et de dimensions plus petites que le contour de la lumière haute.

Selon une réalisation, vue dans la troisième direction, l'ouverture basse de la cavité de l'élément intérieur a un contour situé au droit et de dimensions plus petites que le contour du passage bas qui lui-même a un contour situé au droit et de dimensions plus petites que le contour de la lumière basse.

Selon une réalisation, l'ouverture haute, la face intérieure de la cavité de l'élément intérieur et l'insert ont des contours de forme générale simili-rectangulaire dans la première direction et la deuxième direction. La lumière haute, le passage haut, l'insert, ont également des contours de forme générale simili-rectangulaire dans la première direction et la deuxième direction.

L'invention vise non seulement l'assemblage se trouvant à l'état monté, mais également l'assemblage se trouvant à l'état démonté, la gaine, la casette d'appui et de filtrage, et l'insert de l'élément fonctionnel étant dissociés les uns des autres, en tout ou partie.

Selon un deuxième aspect, l'invention a pour objet une cassette d'appui et de filtrage de vibrations spécialement apte et destinée à faire partie d'un assemblage tel qu'il vient d'être décrit, incluant :
- un fourreau extérieur rigide formé par un ensemble-paroi périphérique ayant une face intérieure et une face extérieure et formant une zone creuse intérieure, s'inscrit entre une enveloppe intérieure et une enveloppe extérieure, chacune de forme générale simili-cylindrique, et comprend une paroi haute avec une face haute extérieure et une face haute intérieure,
- un élément intérieur, au moins pour partie élastiquement déformable, logé dans la zone creuse et porté par le fourreau:
   ∘ comprend un noyau central qui, en réponse à des sollicitations dans la troisième direction inférieures à un certain plafond, est déplacé dans la zone creuse en restant écarté de la face intérieure du fourreau, et qui inclut, d'une part, des parties déformables élastiquement, conformées vers l'extérieur, aptes à contribuer au filtrage et, en réponse à des sollicitations dans la troisième direction dépassant ledit certain plafond, à venir en butée, et, d'autre part, une cavité avec une ouverture haute,
   ∘ comprend également des ailes de positionnement, support, filtrage et rattrapage des dispersions dimensionnelles entre l'élément fonctionnel et l'élément structurel, notamment dans la première direction, situées latéralement de part et d'autre du noyau et déployées jusqu'au fourreau auquel elles sont rigidement associés, situées le long de la première direction, déformables élastiquement dans les première, deuxième et troisième directions,
   ∘ comprend également des faces d'appui et des moyens d'immobilisation, aptes à coopérer avec des faces d'appui conjuguées et des moyens d'immobilisation d'un insert intégré de l'élément fonctionnel.

Selon une réalisation, la face intérieure de la cavité du noyau central est apte à coopérer avec une face extérieure de l'insert et comporte des faces d'appui.

Selon une réalisation, la face intérieure de la cavité du noyau central est apte à immobiliser une face extérieure de l'insert et comporte des lumières, décrochements, saillies.

Selon une réalisation, les moyens d'immobilisation prévus sur l'élément intérieur sont de type à déformation élastique pour le montage et pour le déverrouillage.

Selon une réalisation, le fourreau extérieur comporte une ouverture située à l'une et/ou l'autre de ses extrémités.

Selon une réalisation, le fourreau extérieur comporte sur sa face extérieure des parties saillantes localisées, saillant vers l'extérieur, plus spécialement des parties saillantes localisées s'étendant dans la première direction, propres à un coulissement de montage avec ajustement de la cassette par rapport à la gaine de l'élément structurel. Ces parties saillantes localisées sont, selon les réalisations, des grains de riz et/ou des pattes découpées dans des échancrures et pouvant être sollicitées de façon élastique dans une direction vers l'intérieur et/ou vers l'extérieur du fourreau.

Selon une réalisation, le fourreau extérieur comporte des organes de blocage de fin de course, dans la première direction, par rapport à la gaine de l'élément structurel, sous la forme de redans saillants localisés, saillant vers l'extérieur de la face extérieure, disposés globalement dans un premier plan orthogonal à la première direction. Selon les réalisations, les redans saillants localisés sont des saillies fixes par rapport au fourreau et/ou des pattes pouvant être sollicitées de façon élastique dans une direction vers l'intérieur et/ou vers l'extérieur du fourreau.

Selon une réalisation, la courbe directrice simili-polygonale de l'enveloppe intérieure et de l'enveloppe extérieure du fourreau extérieur est de forme simili-rectangulaire, l'ensemble-paroi périphérique comportant une paroi haute, une paroi basse et deux parois latérales.

Selon une réalisation, le noyau central s'inscrit dans une enveloppe extérieure de forme générale simili-parallélépipédique avec deux faces latérales, deux faces d'extrémité dans la première direction, une face haute, où se trouve l'ouverture haute de la cavité, et une face basse, l'une et l'autre dans la troisième direction, et sur lesquelles se trouvent les parties déformables élastiquement conformées vers l'extérieur aptes à contribuer au filtrage et en réponse à des sollicitations dans la troisième direction dépassant ledit certain plafond à venir en butée. En particulier, le noyau central comporte une cavité traversante de part en part, d'axe de troisième direction, avec une ouverture haute dans la face haute et une ouverture basse dans la face basse, tandis que la paroi basse du fourreau extérieur est pourvue d'un passage bas.

Selon une réalisation, le noyau central de l'élément intérieur comporte :
- une âme rigide ayant :
   ∘ une partie centrale creuse de sorte à former et à limiter la cavité de l'élément intérieur et son ouverture haute, et
   ∘ deux ailes disposées de part et d'autre de la partie centrale et s'étendant dans la première direction comportant deux faces d'extrémité,
- une garniture périphérique, élastiquement déformable, comportant les parties déformables élastiquement conformées vers l'extérieur, recouvrant l'âme rigide, à l'exception d'une partie au moins de ses faces d'extrémité.

Selon une réalisation, les ailes de positionnement, support, filtrage et rattrapage des dispersions dimensionnelles de l'élément intérieur sont attenantes aux faces latérales du noyau et soit se déploient de sorte à avoir une projection orthogonale substantielle sur un troisième plan orthogonal à la troisième direction soit se déploient dans un plan incliné sur le troisième plan de sorte à être rigidement associées aux deux parois latérales du fourreau.

Selon les réalisations, les ailes de positionnement, support, filtrage et rattrapage des dispersions dimensionnelles sont situées le long de la première direction, de façon continue ou bien elles sont situées le long de la première direction, de façon discontinue, sous forme d'ailes élémentaires contigües ou espacées.

Selon une réalisation, les ailes de positionnement, support, filtrage et rattrapage des dispersions dimensionnelles sont situées le long de la première direction, sur une partie notable de la cassette entre ses deux extrémités dans la première direction.

Selon une réalisation, vue dans la troisième direction, l'ouverture haute de la cavité de l'élément intérieur a un contour situé au droit et de dimensions plus petites que le contour du passage haut et/ou l'ouverture basse de la cavité a un contour situé au droit et de dimensions plus petites que le contour du passage bas.

Selon une réalisation, vue dans la troisième direction, l'ouverture haute et l'ouverture basse de la cavité de l'élément intérieur ont des dimensions identiques ou voisines et/ou le passage haut et le passage bas ont des dimensions identiques ou voisines.

L'invention vise non seulement la cassette se trouvant à l'état monté, mais également l'assemblage se trouvant à l'état où elle se trouve avant l'état monté, avant qu'elle supporte l'élément fonctionnel. Dans cet état, les parties déformables élastiquement, conformées vers l'extérieur, viennent en butée ou sont proches de la face inférieure de la paroi haute du fourreau.

Selon un troisième aspect, l'invention a pour objet un procédé de réalisation d'une cassette d'appui et de filtrage de vibrations telle qu'elle vient d'être décrite, dans le cas où elle comporte une âme rigide et une garniture élastiquement déformable, dans lequel :
- on réalise l'âme rigide et le fourreau rigide,
- on dispose l'âme dans la zone creuse intérieure du fourreau, en étant écarté du fourreau lui-même, et sans contact avec lui,
- et on injecte de la matière élastiquement déformable dans un moule reliant l'âme et le fourreau, de sorte à réaliser la garniture élastiquement déformable et les ailes de positionnement, support, filtrage et rattrapage des dispersions dimensionnelles.

Selon un quatrième aspect, l'invention a pour objet un élément structurel spécialement apte et destiné à faire partie d'un assemblage tel qu'il vient d'être décrit, tel que, faisant partie et corps avec lui, une gaine rigide formée par un ensemble-paroi périphérique ayant une face intérieure et une face extérieure et formant un espace creux intérieur avec une ouverture située à une extrémité, s'inscrit entre une enveloppe intérieure et une enveloppe extérieure, chacune de forme générale simili-cylindrique, d'axe de première direction, de segment générateur simili-droit et de courbe directrice simili-polygonale, et comprend une paroi haute pourvue d'une lumière haute, ayant une face haute extérieure et une face haute intérieure, s'étendant dans la première direction et dans une deuxième direction sensiblement horizontale et orthogonale à la première direction.

Selon un cinquième aspect, l'invention a pour objet un élément fonctionnel - comme étant ou comprenant un ventilateur, un échangeur de chaleur, un condenseur - spécialement apte et destiné à faire partie d'un assemblage tel qu'il a été décrit, qui présente en partie basse une face et faisant corps avec elle un insert intégré, globalement rigide, saillant vers le bas dans la troisième direction, apte à traverser la lumière haute et le passage haut, apte à être supporté par et immobilisé par rapport au noyau central de l'élément intérieur, comportant des faces d'appui et des moyens d'immobilisation.

Selon une réalisation, l'insert, d'axe de troisième direction, a une face extérieure apte à coopérer avec la face intérieure de la cavité du noyau central, l'insert étant apte à être supporté par une âme rigide du noyau central, ayant une face d'appui sur sa face extérieure.

Selon une réalisation, l'insert est apte à être immobilisé par rapport à une âme rigide du noyau central, étant pourvu de moyens d'immobilisation, comme des ergots ou des dents.

Selon une réalisation, l'insert, d'axe de troisième direction, a une face extérieure inscrite dans une enveloppe de forme générale simili-cylindrique, d'axe de troisième direction, de segment générateur simili-droit et de courbe directrice simili rectangulaire.

Selon une réalisation, les moyens d'immobilisation de l'insert de l'élément fonctionnel sont de type à déformation élastique, pour le montage et pour le déverrouillage.

Selon une réalisation, l'insert, d'axe de troisième direction, a une face extérieure inscrite dans une enveloppe de forme générale simili-cylindrique, d'axe de troisième direction, de segment générateur simili-droit et de courbe directrice simili rectangulaire.

Selon un sixième et dernier aspect, l'invention a pour objet un engin - comme un appareil ou un véhicule à moteur - comportant un élément fonctionnel - comme étant ou comprenant un ventilateur, un échangeur de chaleur, un condenseur - supporté avec filtrage de vibrations par un élément structurel rigide étendu dans une première direction sensiblement horizontale du corps de l'engin, moyennant un assemblage tel qu'il a été précédemment décrit.

On décrit maintenant brièvement les figures des dessins.

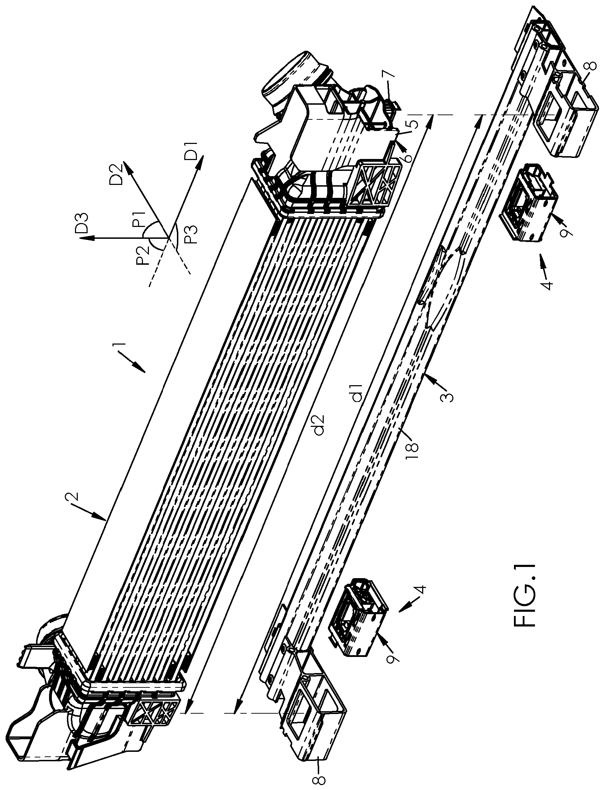

La figure 1 est une vue générale en perspective éclatée d'un assemblage selon l'invention - non encore monté - montrant un élément fonctionnel, un élément structurel et deux ensembles d'assemblage analogues, écartés l'un de l'autre le long de l'élément structurel et de la partie basse de l'élément fonctionnel, chaque ensemble d'assemblage étant tel qu'il comprend une gaine rigide faisant partie et corps avec l'élément structurel, une cassette d'appui et de filtrage de vibrations incluant un fourreau extérieur rigide et un élément intérieur, au moins pour partie élastiquement déformable, tandis que l'élément fonctionnel présente en partie basse une face et faisant corps avec elle un insert intégré saillant vers le bas.

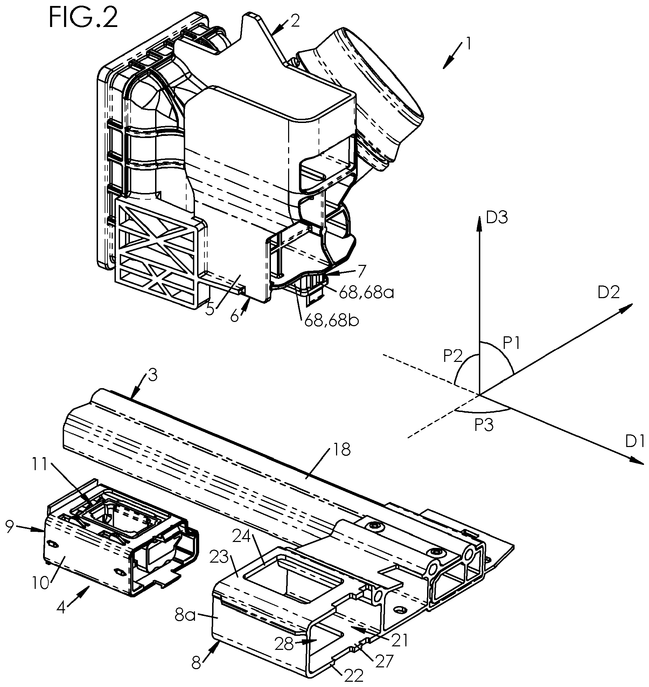

La figure 2 est une vue partielle et agrandie de la figure 1, portant sur un seul élément d'assemblage.

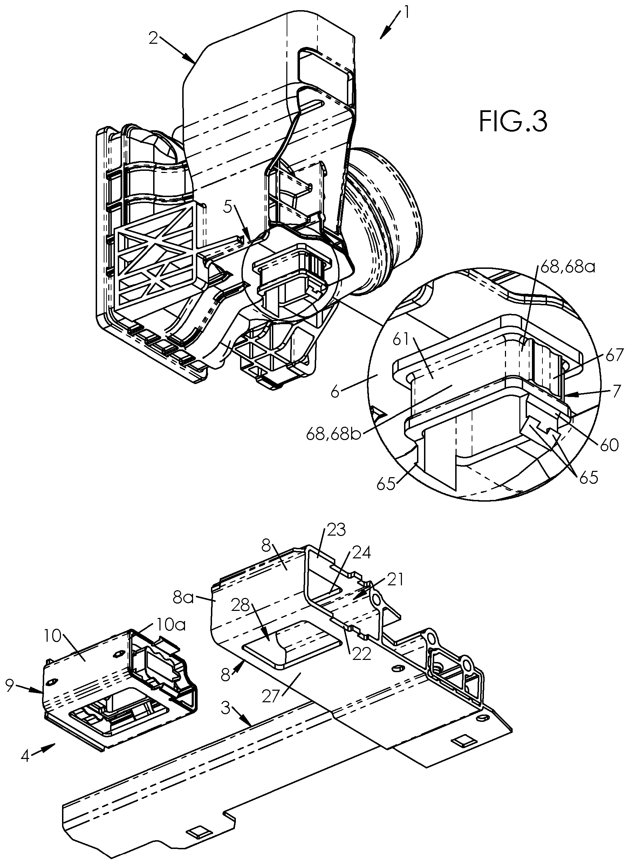

La figure 3 est une vue en perspective de l'assemblage pour partie dissocié, montrant notamment l'élément fonctionnel et son insert.
Les figures 4 et 5 sont deux vues en perspective, sous deux angles différents, de la gaine rigide faisant partie et corps avec l'élément structurel et de la cassette d'appui et de filtrage de vibrations incluant un fourreau extérieur rigide et un élément intérieur, au moins pour partie élastiquement à l'état avant montage par coulissement dans une première direction. La figure 4 illustre deux détails agrandis illustrant des parties saillantes et des parties découpées pour le coulissement de la cassette dans la gaine et la figure 5 un détail agrandi analogue.
La figure 6 est une vue d'extrémité, dans la première direction, de la cassette d'appui et de filtrage de vibrations montrant son fourreau extérieur rigide et son élément intérieur, au moins pour partie élastiquement déformable qui lui-même comprend un noyau central formé d'une âme rigide et d'une garniture périphérique, élastiquement déformable, et deux ailes de positionnement, support, filtrage et rattrapage des dispersions dimensionnelles entre l'élément fonctionnel et l'élément structurel.
La figure 7 est une vue analogue à la figure 6 illustrant la cassette d'appui et de filtrage de vibrations montée dans la gaine rigide de l'élément structurel.
La figure 8 est une vue analogue à la figure 2, illustrant la cassette d'appui et de filtrage de vibrations montée dans la gaine rigide de l'élément structurel et l'élément fonctionnel avant mise en place par insertion de l'insert vers le bas dans la cassette. Cette figure illustre aussi un détail des organes de fin de course de la cassette dans le fourreau.
La figure 9 est une vue en coupe selon la ligne IX de la figure 8.

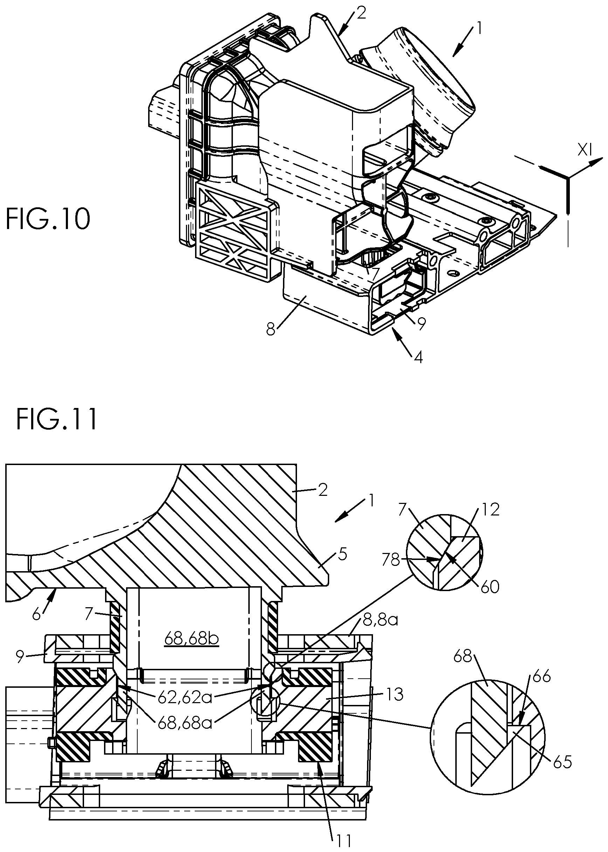

La figure 10 est une vue analogue à la figure 8, illustrant l'insert de l'élément fonctionnel monté avec son insert inséré dans la cassette d'appui et de filtrage de vibrations, elle-même montée dans la gaine rigide de l'élément structurel.
La figure 11 est une vue en coupe selon la ligne XI de la figure 10.

Ci-après un exposé détaillé de plusieurs modes de réalisation de l'invention assorti d'exemples et de référence aux dessins.

Un assemblage 1 selon l'invention est conçu pour - à l'état monté - le support avec filtrage de vibrations d'un élément fonctionnel 2 - comme étant ou comprenant un ventilateur, un échangeur de chaleur, un condenseur - sur un élément structurel 3, rigide, étendu dans une première direction D1 du corps d'un engin - comme un appareil ou un véhicule à moteur -.

Il est entendu que l'élément fonctionnel 2 peut remplir une autre fonction que l'une de celles mentionnées et que l'engin peut être autre qu'un appareil ou un véhicule à moteur.

Il est entendu que l'invention porte non seulement sur l'assemblage 1, mais également sur l'élément fonctionnel 2 - comme étant ou comprenant un ventilateur, un échangeur de chaleur, un condenseur - spécialement apte et destinée à faire partie de l'assemblage 1, et sur l'engin - comme un appareil ou un véhicule à moteur - comportant un tel élément fonctionnel 2 supporté avec filtrage de vibrations par l'élément structurel 3, moyennant l'assemblage 1.

L'assemblage 1 est adapté au cas où l'élément fonctionnel 2, en fonctionnement, génère des vibrations, comme par exemple celles produites par des éléments tournants comme dans le cas d'un ventilateur, et au cas où l'engin, en fonctionnement, génère des vibrations. L'assemblage 1 a alors pour fonction de supprimer ou d'atténuer les vibrations dans le sens élément fonctionnel 2 vers engin, comme dans le sens inverse engin vers élément fonctionnel 2.

La description est faite plus spécialement en relation avec l'assemblage 1 à l'état monté et dans la position usuelle dans laquelle il se trouve. Cette position est telle que la première direction D1 est sensiblement horizontale. L'élément fonctionnel 2 s'étend horizontalement dans la première direction D1 et verticalement dans une troisième direction sensiblement verticale D3. C'est en référence à cette disposition que doivent être compris les termes « haut » et « bas ».

On désigne par D2 une deuxième direction, sensiblement horizontale et orthogonale à la première direction D1.

Les trois directions D1, D2 et D3 définissent un référentiel à trois directions.

On désigne par premier plan P1, un plan sensiblement vertical orthogonal à la première direction D1, par deuxième plan P2, un plan sensiblement vertical orthogonal à la deuxième direction D2, et par troisième plan P3, un plan sensiblement horizontal orthogonal à la troisième direction D3.

Cette disposition n'est en rien limitative, l'assemblage 1 pouvant se trouver dans une autre disposition.

L'assemblage 1 comprend deux ensembles d'assemblage analogues 4, écartés l'un de l'autre, le long de la première direction D1, de l'élément structurel 3 et de la partie basse 5 de l'élément fonctionnel 2.

L'élément fonctionnel 2 présente dans la partie basse 5 une face 6, notamment de direction générale horizontale, ou du moins étendue horizontalement, et faisant corps avec elle deux inserts 7 saillant vers le bas dans la troisième direction D3, écartés l'un de l'autre, le long de la première direction D1, intégrés à l'élément fonctionnel 2 pour en faire partie intégrante, comme il sera décrit par la suite.

Les deux parties structurelles de l'assemblage 1 sont espacées l'une de l'autre d'une distance d1 dans la direction D1 et les deux inserts 7 sont espacés l'un de l'autre d'une distance d2 dans la direction D1. Les distances d1 et d2 résultent de la fabrication de l'élément structurel 3 et de l'élément fonctionnel 2. Pour que les deux ensembles d'assemblage 4 soient opérants il importe que d1 et d2 soient égaux, mais tel ne peut être le cas, du fait des tolérances dimensionnelles de fabrication, s'agissant de pièces de grande taille, fabriquées en grandes séries. Il existe par conséquent des écarts de dimensions, appelées dispersions, ici principalement dans la direction D1. Pour que l'assemblage soit opérant dans les meilleures conditions et avec la plus grande efficacité, il importe de rattraper les dispersions longitudinales, ce que précisément assure l'assemblage 1 selon l'invention.

Les deux ensembles d'assemblage 4 étant analogues, on se borne par la suite à n'en décrire qu'un, sa structure assurant le rattrapage de dispersions longitudinales. Cet ensemble d'assemblage est désigné le plus souvent de façon synthétique et abrégée par le terme « assemblage » qui doit donc être compris comme signifiant aussi « ensemble d'assemblage ».

Chaque ensemble d'assemblage 4 comprend, dans la réalisation représentée sur les figures :
- une gaine rigide 8 faisant partie et corps avec l'élément structurel 3, dénommée parfois de façon synthétique « gaine »,
- une cassette d'appui et de filtrage de vibrations 9, dénommée parfois de façon synthétique « cassette », incluant un fourreau extérieur rigide 10 et un élément intérieur 11, au moins pour partie élastiquement déformable, qui lui-même comprend un noyau central 12 formé d'une âme rigide 13 et d'une garniture périphérique 14, élastiquement déformable, et deux ailes 15 de positionnement, support, filtrage et rattrapage des dispersions dimensionnelles, et
- l'insert 7 faisant partie intégrante de l'élément fonctionnel 2.

Outre que la disposition de l'assemblage 1 n'est en rien limitative, comme indiqué, l'invention vise non seulement l'assemblage 1 se trouvant à l'état monté, mais également l'assemblage 1 se trouvant à l'état démonté, la gaine 8, la casette 9, et l'insert 7 de l'élément fonctionnel 2 étant dissociés les uns des autres, en tout ou partie.

L'élément structurel 3 comporte une traverse 18, en l'espèce une traverse basse profilée rigide. Le plus souvent, une telle traverse 18 est disposée transversalement dans le compartiment moteur de l'engin, vers l'avant.

La gaine 8 est rigidement fixée sur la traverse 18 vers sa partie terminale et sur un côté latéral. Le terme « latéral » doit être compris comme ce qui est situé sur le côté par rapport à un axe de première direction passant par la gaine 8 et la cassette 9. Selon les réalisations, la gaine 8 est rapportée sur la traverse 18 ou bien venue de fabrication avec elle.

La gaine 8 est formée par un ensemble-paroi périphérique 8a ayant une face intérieure 19 et une face extérieure 20. Elle forme un espace creux intérieur 21 qui comporte une ouverture 22 située à chaque extrémité de la gaine 8 dans la première direction D1.

Par « ensemble-paroi », il faut comprendre une paroi ou plusieurs parois associées rigidement entre elles, le tout formant un ensemble.

Par « intérieur » et « extérieur », relativement aux faces 19 et 20 et éléments associés, il faut comprendre ce qui se trouve dans la gaine 8 et hors d'elle, respectivement.

L'ensemble-paroi périphérique 8a s'inscrit entre une enveloppe intérieure et une enveloppe extérieure. Chacune de ces enveloppes est de forme générale simili-cylindrique, d'axe de première direction D1, de segment générateur simili-droit et de courbe directrice simili-polygonale, en l'espèce simili rectangulaire.

Par le préfixe « simili », il faut comprendre que ce qui est ainsi qualifié a la forme associée au préfixe ou bien une forme plus ou moins voisine ou dérivée.

L'ensemble-paroi périphérique 8a comprend une paroi haute 23 pourvue d'une lumière haute 24, ayant une face haute extérieure 25 et une face haute intérieure 26.

L'ensemble-paroi périphérique 8a comprend une paroi basse 27, qui dans la réalisation particulière représentée sur les figures, est pourvue d'une lumière basse 28, par raison d'analogie avec la paroi haute 23 pourvue d'une lumière haute 24 et de sorte non seulement à diminuer la quantité de matière, mais également à offrir une grande flexibilité, l'assemblage 1 pouvant accueillir aussi des éléments fonctionnels conventionnels du type à pions, maintenus assemblés au moyen d'inserts distinct d'eux et, le cas échéant, d'une pièce de verrouillage. La lumière basse 28 permet également, lorsque cela est souhaité, le passage d'un outil de déverrouillage de l'insert 7, afin d'enlever l'élément fonctionnel 2.

La paroi basse 27 comporte une face basse extérieure 29 et une face basse intérieure 30.

Les parois 23 et 27 sont situées à l'aplomb l'une de l'autre dans la troisième direction D3. Elles sont de dimensions identiques ou voisines et de forme générale simili-rectangulaire dans la première direction D1 et la deuxième direction D2.

Les faces hautes 25 et 26 et basses 29 et 30, s'étendent dans la première direction D1 et dans la deuxième direction D2, c'est-à-dire dans le troisième plan P3.

Dans la réalisation particulière représentée sur les figures, avec lumière basse 28, la lumière haute 24 et la lumière basse 28 sont situées à l'aplomb l'une de l'autre dans la troisième direction D3. Dans la réalisation particulière représentée, elles sont de dimensions identiques ou voisines et de forme générale simili-rectangulaire dans la première direction D1 et la deuxième direction D2. Dans d'autres réalisations, la lumière haute 24 et la lumière basse 28 ont des formes et/ou dimensions différentes.

Dans d'autres réalisations, il n'est prévu que la lumière haute 24 et aucune lumière basse, la paroi basse 27 étant dépourvue d'une telle lumière basse.

L'ensemble-paroi périphérique 8a comprend également deux parois latérales 31 reliant la paroi haute 23 et la paroi basse 27.

L'invention vise aussi l'élément structurel 3 spécialement apte et destiné à faire partie de l'assemblage 1 qui comporte une gaine 8 telle qu'elle vient d'être décrite pour chaque ensemble d'assemblage 4.

Le fourreau extérieur rigide 10 est formé par un ensemble-paroi périphérique 10a ayant une face intérieure 32 et une face extérieure 33. Il forme une zone creuse intérieure 34 qui comporte une ouverture 35 située à chaque extrémité du fourreau 10 dans la première direction D1.

L'expression « ensemble-paroi » doit être comprise comme précédemment.

Par « intérieur » et « extérieur », relativement aux faces 32 et 33 et éléments associés, il faut comprendre ce qui se trouve dans le fourreau 10 et hors de lui, respectivement.

L'ensemble-paroi périphérique 10a s'inscrit entre une enveloppe intérieure et une enveloppe extérieure. Chacune de ces enveloppes est de forme générale simili-cylindrique, d'axe de première direction D1, de segment générateur simili-droit et de courbe directrice simili-polygonale, en l'espèce simili rectangulaire.

L'ensemble-paroi périphérique 10a comprend une paroi haute 36 pourvue d'un passage haut 37, ayant une face haute extérieure 38 et une face haute intérieure 39.

L'ensemble-paroi périphérique 10a comprend une paroi basse 40, qui dans la réalisation particulière représentée sur les figures, est pourvue d'un passage bas 41, par raison d'analogie avec la paroi haute 36 pourvue d'un passage haut 37 et de sorte non seulement à diminuer la quantité de matière, mais également à offrir une grande flexibilité, l'assemblage 1 pouvant accueillir aussi des éléments fonctionnels conventionnels du type à pions, maintenus assemblés au moyen d'un insert distinct de l'élément fonctionnel 2 et, le cas échéant, d'une pièce de verrouillage. Le passage bas 41permet également, lorsque cela est souhaité, le passage d'un outil de déverrouillage de l'insert 7, comme précédemment mentionné.

La paroi basse 40 comporte une face basse extérieure 42 et une face basse intérieure 43.

Les parois 36 et 40 sont situées à l'aplomb l'une de l'autre dans la troisième direction D3. Elles sont de dimensions identiques ou voisines et de forme générale simili-rectangulaire dans la première direction D1 et la deuxième direction D2.

Les faces hautes 38 et 39 et basses 42 et 43, s'étendent dans la première direction D1 et dans la deuxième direction D2, c'est-à-dire dans le troisième plan P3.

Dans la réalisation particulière représentée sur les figures (avec passage haut 37 et passage bas 41), le passage haut 37 et le passage bas 41 sont situés à l'aplomb l'un de l'autre dans la troisième direction D3. Ils sont de dimensions identiques ou voisines et de forme générale simili-rectangulaire dans la première direction D1 et la deuxième direction D2. Dans d'autres réalisations, le passage haut 37 et le passage bas 41 ont des formes et/ou dimensions différentes.

Dans d'autres réalisations, il n'est prévu que le passage haut 37 et aucun passage bas.

Le passage haut 37 est homologue de la lumière haute 24 et, lorsque cela est prévu, comme dans la réalisation particulière, le passage bas 41 est homologue de la lumière basse 28.

L'ensemble-paroi périphérique 10a comprend également deux parois latérales 44 reliant la paroi haute 36 et la paroi basse 40.

L'enveloppe extérieure du fourreau 10 est complémentaire de l'enveloppe intérieure de la gaine 8, de sorte à permettre un coulissement du fourreau 10 dans la gaine 8 et une immobilisation en position en fin de course, par contact mutuel. Le fourreau 10 est donc assemblé rigidement à la gaine 8 par un coulissement dans la première direction D1 et des organes de blocage de fin de course.

Le fourreau 10 est logé tout entier dans l'espace creux 21. Le fourreau 10 et la gaine 8 ont dans la première direction D1 une même longueur ou des longueurs voisines, les ouvertures terminales 22 et 35 étant situées plus ou moins dans deux mêmes premiers plans.

Pour immobiliser en position le fourreau 10, et donc la cassette 9, par contact sur la face intérieure 19 de la gaine 8, il est prévu des zones complémentaires conjuguées du fourreau 10, et donc de la cassette 9, et de la gaine 8 comprenant, s'agissant du fourreau 10, des parties saillantes 45a fixes par rapport au fourreau 10, ou bien des parties saillantes découpées et déplaçables 45b. Ces parties 45a, 45b sont conjuguées de parties complémentaires de la face intérieure 19 de la gaine 8, formées par exemple par la face 19 elle-même.

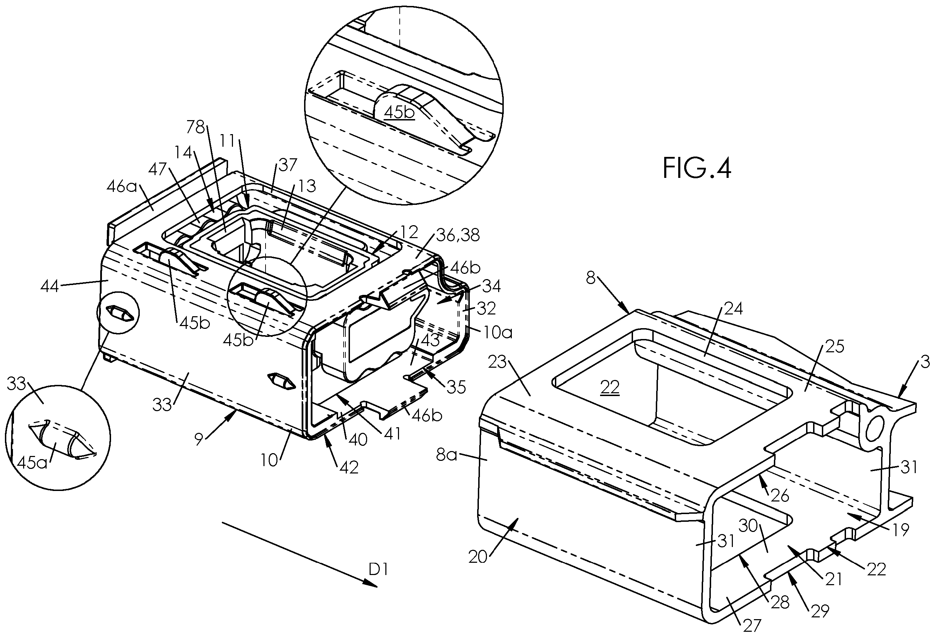

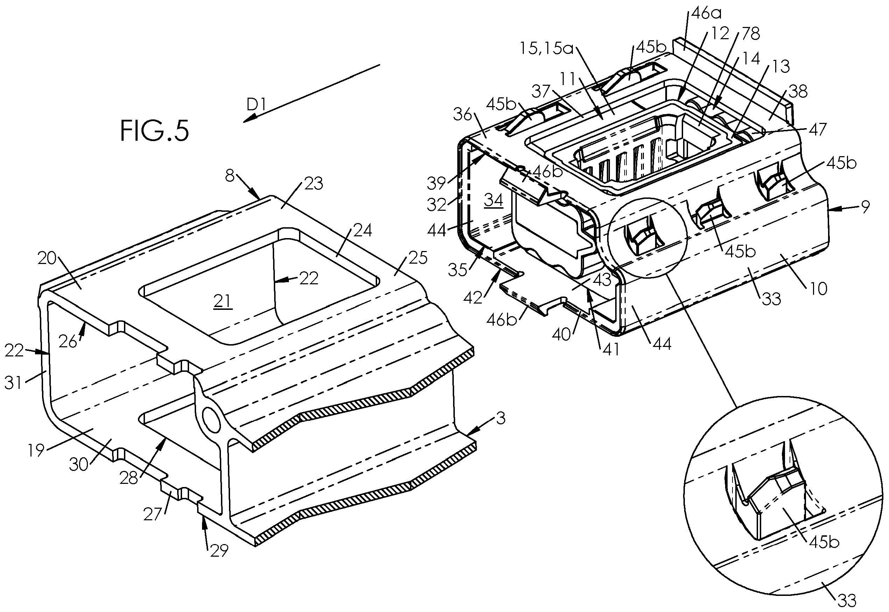

Comme illustré plus particulièrement par les figures 4 et 5 et les détails agrandis de ces figures, les parties saillantes 45a, 45b sont localisées et s'étendent dans la première direction D1. Elles sont propres à un coulissement de montage avec ajustement du fourreau 10, et donc de la cassette 9, par rapport à la gaine 8 de l'élément structurel 3. Ces parties saillantes localisées sont, par exemple, des grains de riz 45a ou bien des pattes 45b découpées dans des échancrures et pouvant être sollicitées de façon élastique par rapport au fourreau dans la troisième direction D3, de sorte à venir au contact de la face intérieure 19 de la gaine 8.

Le fourreau 10 est assemblé à la gaine 8 par coulissement et comporte des organes de blocage de fin de course dans la première direction D1, par rapport à la gaine 9 de l'élément structurel 3. Comme illustré plus particulièrement par les figures 4 et 5, ces organes de blocage de fin de course sont sous la forme de redans saillants localisés 46a, 46b, saillant vers l'extérieur de la face extérieure 33 du fourreau 10 et notamment de la face haute extérieure 38 de la paroi haute 36. Ces redans sont disposés globalement dans le premier plan P1, c'est-à-dire orthogonaux à la première direction D1 de coulissement. Ces redans sont par exemple une saillie fixe 46a par rapport au fourreau 10 ou une patte 46b découpée dans une échancrure et pouvant être sollicitée de façon élastique par rapport au fourreau dans la troisième direction D3. Ces redans peuvent ainsi venir s'appliquer contre les deux bords des ouvertures terminales 22 situés sur la paroi haute 23 de la gaine. D'un côté, une saillie fixe 46a et de l'autre côté une patte 46b. Avec une telle disposition, le fourreau 10 est bloqué en fin de course de coulissement par la saillie fixe 46a et il ne peut se déplacer en sens opposé par la patte 46b.

L'élément intérieur 11, au moins pour partie élastiquement déformable grâce à la garniture périphérique 14 en caoutchouc ou autre matériau analogue du point de vue de la déformation élastique, est logé tout entier dans la zone creuse 34 du fourreau 10 et porté par lui. Il comprend, d'une part, le noyau central 12 formé de l'âme rigide 13 et de la garniture périphérique 14, et, d'autre part, deux ailes 15 de positionnement, support, filtrage et rattrapage des dispersions dimensionnelles. Le noyau 12 est porté par les ailes 15 élastiquement déformables de sorte à être en quelque sorte « flottant » dans la zone creuse 34, par rapport au fourreau 10, et donc par rapport à la gaine 8 et l'élément structurel 3. En outre, le noyau 12 est lui-même pour partie élastiquement déformables grâce à la garniture périphérique 14. Et il peut venir en butée contre le fourreau 10. C'est ainsi qu'en définitive, le noyau 12 assure en combinaison, d'une part, la fonction de suppression ou du moins d'atténuation des vibrations dans le sens élément fonctionnel 2 vers engin (et donc élément structurel 3), comme dans le sens inverse engin (et donc élément structurel 3) vers élément fonctionnel 2 et, d'autre part, la fonction de rattrapage des dispersions, notamment longitudinales entre l'élément fonctionnel 2 et l'élément structurel 3.

Ainsi, en réponse à des sollicitations dans la troisième direction D3, inférieures à un certain plafond, le noyau 12 est déplacé dans la zone creuse 34 en restant écarté de la face intérieure 32 du fourreau 10.

Le noyau 12 inclut, d'une part, des parties déformables élastiquement 47, conformées vers l'extérieur, aptes à contribuer au filtrage. Ces parties déformables font partie de la garniture périphérique 14. En réponse à des sollicitations dans la troisième direction D3 dépassant ledit certain plafond, les parties déformables élastiquement 47 viennent en butée contre la face intérieure 32 du fourreau 10.

Le noyau 12 inclut, d'autre part, une cavité 48, avec une ouverture haute 49, homologue du passage haut 37, limitée par une face intérieure 62.

Dans la réalisation particulière représentée sur les figures, la cavité 48 est ouverte de part en part, avec en outre une ouverture basse 50, de sorte à offrir une grande flexibilité, l'assemblage 1 pouvant accueillir aussi des éléments fonctionnels conventionnels du type à pions, maintenus assemblés au moyen d'un insert distinct de l'élément fonctionnel 2 et, même, le cas échéant, d'une pièce de verrouillage passant par l'ouverture basse 50. L'ouverture basse 50 permet également, lorsque cela est souhaité, le passage d'un outil de déverrouillage de l'insert 7, comme précédemment mentionné.

Dans la réalisation particulière représentée sur les figures (avec ouverture basse 50), l'ouverture haute 49 et l'ouverture basse 50 de la cavité 48 sont situées à l'aplomb l'une de l'autre dans la troisième direction D3. Elles sont de dimensions identiques ou voisines et de forme générale simili-rectangulaire dans la première direction D1 et la deuxième direction D2. Dans d'autres réalisations, l'ouverture haute 49 et l'ouverture basse 50 ont des formes et/ou dimensions différentes.

La face intérieure 62 qui limite la cavité 48 est alors inscrite dans une enveloppe de forme générale simili-cylindrique, d'axe de troisième direction D3, de segment générateur simili-droit et de courbe directrice simili rectangulaire.

Une telle face intérieure 62 comporte ainsi deux portions 62a face à face, situées parallèlement au premier plan P1 et deux portions 62b face à face, situées parallèlement au deuxième plan P2.

Dans la réalisation représentée sur les figures, le noyau central 12 s'inscrit dans une enveloppe extérieure de forme générale simili-parallélépipédique. Il comporte deux faces latérales 51 et deux faces d'extrémité 52 dans la première direction D1. Il comporte en outre une face haute 53 où se trouve l'ouverture haute 49 de la cavité 48, et une face basse 54 où se trouve l'ouverture basse 50, lorsqu'elle est prévue. Ces deux faces 53 et 54 sont dans la troisième direction D3.

Les parties déformables élastiquement 47 sont sur les faces latérales 51, haute 53 et basse 54. Les faces d'extrémité 52 sont dépourvues de parties déformables.

Les parties déformables élastiquement 47, conformées vers l'extérieur, sont aptes à contribuer au filtrage et en réponse à des sollicitations dans la troisième direction D3 dépassant ledit certain plafond à venir en butée contre la face intérieure 32 de la paroi haute 36 ou de la paroi basse 40 du fourreau 10.

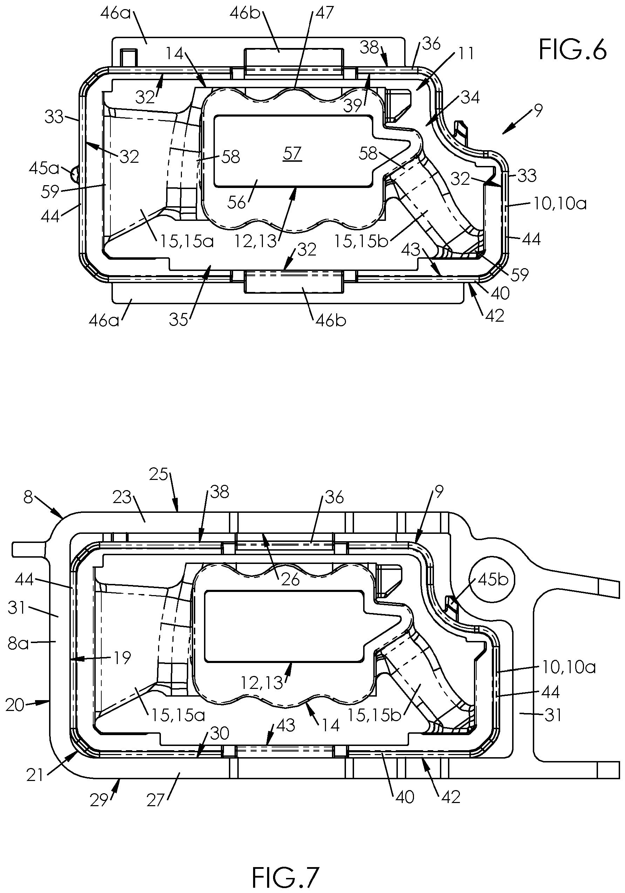

Comme représenté tout spécialement sur les figures 6 et 7, les parties déformables élastiquement 47 se trouvant sur les faces haute 53 et basse 54 du noyau 12 comportent une face extérieure avec des ondulations moyennant des parties saillantes et des parties en creux.

Dans la réalisation représentée, le noyau central 12 de l'élément intérieur 11 comporte l'âme rigide 13 et la garniture périphérique 14.

L'âme rigide 13 comporte en premier lieu une partie centrale creuse 55, ayant la face intérieure 62 qui forme et limite la cavité 48 et son ouverture haute 49, et le cas échéant l'ouverture basse 50 lorsqu'elle est prévue, comme dans la réalisation particulière représentée sur les figures.

L'âme rigide 13 comporte en second lieu deux ailes 56 disposées de part et d'autre de la partie centrale 55 et s'étendant dans la première direction D1, ayant à leurs deux extrémités dans la direction D1, deux faces d'extrémité 57.

La garniture périphérique 14 qui est élastiquement déformable et inclut les parties déformables élastiquement conformées vers l'extérieur 47, recouvre en « enrobe » l'âme rigide 13, à l'exception d'une partie au moins, et plus spécialement de l'intégralité, de ses faces d'extrémité 57.

Les ailes 15 de positionnement, support, filtrage et rattrapage des dispersions dimensionnelles entre l'élément fonctionnel 2 et l'élément structurel 3, notamment dans la première direction D1, sont situées latéralement de part et d'autre du noyau 12. Elles se déploient jusqu'au fourreau 10 auquel elles sont rigidement associés.

Les ailes 15 sont situées le long de la première direction D1.

Les ailes 15 sont déformables élastiquement dans les première, deuxième et troisième directions D1, D2 et D3.

On se réfère maintenant plus spécialement aux figures 6 et 7 qui illustrent une réalisation dans laquelle les ailes 15 sont attenantes par leurs extrémités proximales 58 aux faces latérales 51 du noyau 12 et rigidement associées par leurs extrémités distales 59 aux deux parois latérales 44 du fourreau 10.

L'aile de gauche 15a, située du côté gauche sur les figures 6 et 7, se déploie parallèlement au troisième plan P3, ce qui revient à avoir une projection orthogonale intégrale sur le troisième plan P3.

L'aile de gauche 15a est massive et s'étend dans la troisième direction D3 sur presque toute la hauteur du noyau 12 entre ses faces haute 53 et basse 54. Sa partie extrême proximale 58 est arrondie en creux pour ne pas entraver les déplacements. Sa partie extrême distale 59 est attenante à la face intérieure 32 de la paroi latérale de gauche 44 du fourreau 10 et s'étend dans la troisième direction D3 sur presque toute la hauteur de cette paroi latérale de gauche 44 entre les parois haute 36 et basse 40.

L'aile de droite 15b, située du côté droit sur les figures 6 et 7, se déploie dans un plan incliné sensiblement à 45° sur le troisième plan P3. Sa projection orthogonale sur le troisième plan P3 est donc substantielle.

L'aile de droite 15b est moins massive que l'aile de gauche 15a, étant d'épaisseur plus mince dans la troisième direction D3. Par suite, elle s'étend dans la troisième direction D3 sur une partie seulement de la hauteur du noyau 12. Sa partie extrême proximale 58 est située entre - et écartée - des faces haute 53 et basse 54 du noyau 12. Sa partie extrême distale 59 est attenante à la face intérieure 32 de la paroi latérale de droite 44 du fourreau 10 dans l'angle de raccordement avec sa paroi basse 40.

Dans la réalisation représentée sur les figures, les ailes 15 sont situées le long de la première direction D1, de façon continue, sur une partie notable de la cassette 9 entre ses deux extrémités dans la première direction D1. Plus précisément, les ailes 15 s'étendent sur environ la longueur de la partie centrale 55 de l'âme rigide 13.

Dans d'autres réalisations possibles, les ailes 15 sont situées le long de la première direction D1, de façon discontinue, sous forme d'ailes élémentaires qui sont contigües ou bien espacées les unes des autres.

Dans tous les cas, les ailes 15 doivent pouvoir être déformées dans la première direction D1 de manière à rattraper les dispersions dimensionnelles longitudinales dans la première direction D1, entre l'élément fonctionnel 2 et l'élément structurel 3.

L'invention vise aussi la cassette 9 telle qu'elle a été décrite, spécialement apte et destinée à faire partie de l'assemblage 1, que cette cassette 9 soit à l'état monté ou à l'état avant montage.

Pour la réalisation, on réalise l'âme rigide 13 et le fourreau rigide 10. Puis, on dispose l'âme 13 dans la zone creuse intérieure 34 du fourreau 10, en étant écarté du fourreau 10 lui-même, et sans contact avec lui. Puis, on injecte de la matière élastiquement déformable dans un moule reliant l'âme 13 et le fourreau 10, de sorte à réaliser la garniture élastiquement déformable 14 et les ailes 15 qui forment un ensemble d'un seul tenant.

Dans la réalisation représentée sur les figures, vus dans la troisième direction D3, l'ouverture haute 49 de la cavité 48 de l'élément intérieur 11 et l'insert 7 ont, des contours situés au droit et de dimensions plus petites que le contour du passage haut 37 qui lui-même a un contour situé au droit et de dimensions plus petites que le contour de la lumière haute 24. En outre, dans la réalisation particulière envisagée (avec ouverture basse 50, passage bas 41 et lumière basse 28), vue dans la troisième direction D3, l'ouverture basse 50 de la cavité 48 a un contour situé au droit et de dimensions plus petites que le contour du passage bas 41 qui lui-même a un contour situé au droit et de dimensions plus petites que le contour de la lumière basse 28. Enfin, toujours dans cette réalisation particulière, vues dans la troisième direction D3, l'ouverture haute 49 et l'ouverture basse 50 de la cavité 48 ont des dimensions identiques ou voisines, le passage haut 37 et le passage bas 41 ont des dimensions identiques ou voisines, la lumière haute 24 et la lumière basse 28 des dimensions identiques ou voisines. Dans d'autres réalisations, le passage haut 37 et le passage bas 41 ont des formes et/ou dimensions différentes.

L'élément fonctionnel 2 présente dans la partie basse 5 la face 6 et faisant corps avec elle l'insert 7 qui est globalement rigide et intégralement solidaire de l'élément fonctionnel 2. L'insert 7 est intégré à l'élément fonctionnel 2 et indissociable de lui. C'est en cela que l'élément 2 est spécialement adapté à l'assemblage 1.

Par « intégré », il faut comprendre que l'insert 7 forme avec l'élément fonctionnel 2 un ensemble et un tout cohérent, l'insert 7 étant incorporé à l'élément fonctionnel 2 de façon solidaire et monobloc. Selon les réalisations, l'insert 7 est venu d'origine et de fabrication avec le reste de l'élément fonctionnel 2. Ou bien, l'insert 7 a été rapporté et solidarisé au reste de l'élément fonctionnel 2, au moment de la fabrication ou ultérieurement. Cela couvre aussi le cas où l'insert 7 est une pièce en soi qui, lorsque souhaité est incorporée à l'élément fonctionnel 2 de façon solidaire et monobloc.

L'insert 7 saille vers le bas dans la troisième direction D3.

Le cas échéant, l'insert 7 est creux, en totalité ou en partie, étant limité par une paroi.

Dans la réalisation représentée, l'insert 7, d'axe de troisième direction D3, a une face extérieure 61 inscrite dans une enveloppe de forme générale simili-cylindrique, d'axe de troisième direction D3, de segment générateur simili-droit et de courbe directrice simili rectangulaire.

Une telle face extérieure 61 comporte ainsi deux portions 68a face à face, situées parallèlement au premier plan P1 et deux portions 68b face à face, situées parallèlement au deuxième plan P2.

La face extérieure 61 de l'insert 7 et la face intérieure 62 de la cavité 48 sont de formes complémentaires de sorte à pouvoir coopérer dans la première direction D1 et dans la deuxième direction D2.

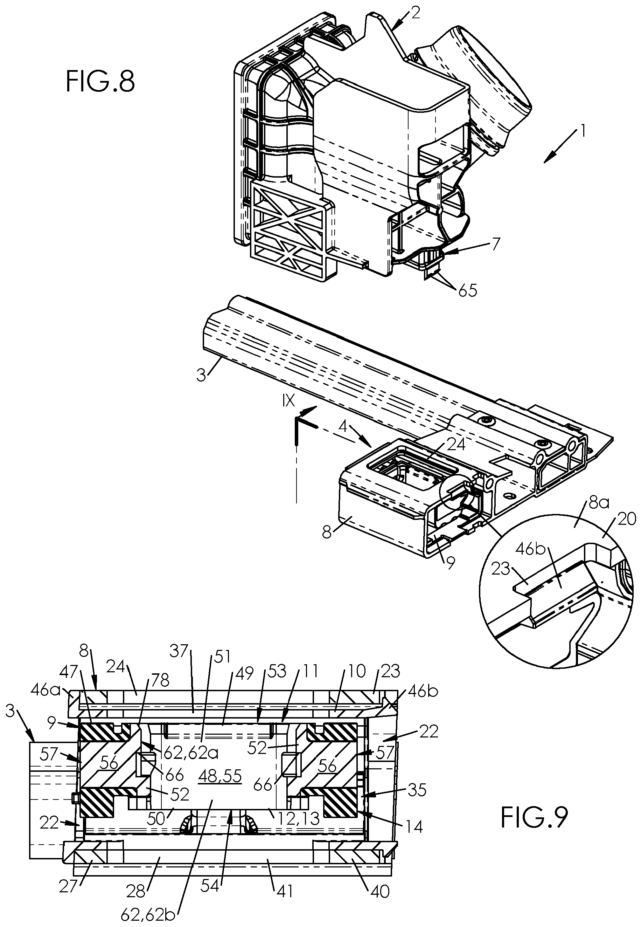

Pour assembler l'élément fonctionnel 2 aux deux cassettes d'appui et de filtrage des vibrations 9, on part d'une situation dans laquelle, comme représenté sur la figure 8, l'élément fonctionnel 2 est situé sensiblement à l'aplomb au-dessus de l'élément structurel 3, les deux inserts 7 de l'élément fonctionnel 2 étant situés sensiblement à l'aplomb au-dessus des deux cassettes d'appui et de filtrage des vibrations 9.

Puis, on déplace l'élément fonctionnel 2 et donc ses deux cassettes d'appui et de filtrage des vibrations 9 verticalement et vers le bas afin que les deux inserts 7 de l'élément fonctionnel 2 viennent coopérer avec les des deux cassettes d'appui et de filtrage des vibrations 9.

Lorsque l'assemblage 1 est monté et réalisé, l'insert 7 traverse la lumière haute 24 et le passage haut 37, de sorte à interférer et être associé à la cassette d'appui et de filtrage des vibrations 9.

Plus précisément, et en premier lieu, l'insert 7 est logé dans la cavité 48 et, du fait de la complémentarité de formes de la face extérieure 61 de l'insert 7 et de la face intérieure 62 de la cavité 48, l'insert 7 est associé à l'âme rigide 13 dans la première direction D1 et dans la deuxième direction D2.

En deuxième lieu, l'insert 7 est supporté par le noyau central 12 de l'élément intérieur 11, qui encaisse le poids et les forces crées par l'élément fonctionnel 2.

A cet effet, il est prévu des faces d'appui conjuguées 60,78, respectivement de l'insert 7 et du noyau central 12, la première étant appliquée et supportée par la seconde.

Et, en troisième lieu, l'insert 7 est immobilisé par rapport au noyau central 12 de l'élément intérieur 11.

A cet effet, il est prévu des moyens complémentaires d'immobilisation 65, 66.

Ainsi, lorsque l'assemblage 1 est monté, la face extérieure 61 de l'insert 7 coopère avec la face intérieure 62 de la cavité 48 du noyau central 12.

Cette coopération s'entend, en premier lieu, dans la première direction D1 et dans la deuxième direction D2, comme il a été exposé.

Cette coopération est telle, en deuxième lieu, que l'insert 7 est supporté par l'âme rigide 13 du noyau central 12 grâce à des faces d'appui conjuguées 60,78 prévues respectivement sur la face extérieure 61 de l'insert 7 et sur la face intérieure 62 de la partie centrale creuse 55 de l'âme rigide 13.

Il doit être compris que l'expression « faces conjuguées » n'est pas limitative et exprime que l'âme rigide 13 et l'insert 7 sont localement déformés de sorte à pouvoir coopérer en blocage dans la troisième direction D3, vers le bas, la face conjuguée 78 de l'âme rigide 13 formant siège sur lequel repose la face conjuguée 60 de l'insert 7.

Dans la réalisation représentée sur les figures, la face conjuguée 78 de l'âme rigide 13 formant siège est un décrochement de la face intérieure 62, dont le plan est incliné sur la troisième direction D3, par exemple à environ 45°.

De son côté, la face conjuguée 60 de l'insert 7 est un décrochement de la face extérieure 61, dont le plan est incliné sur la troisième direction D3, par exemple à environ 45°.

Etant donné que la coopération de l'élément fonctionnel 2 avec l'élément structurel 3 est assurée par un mouvement relatif vers le bas du premier par rapport au second, les décrochés des faces conjuguées 60, 78 sont plus larges vers le haut et plus étroits vers le bas.

Cette coopération est telle, en troisième lieu, que l'insert 7 est immobilisé par rapport à l'âme rigide 13 du noyau central 12 grâce à des moyens complémentaires d'immobilisation, comme des ergots ou des dents 65 et des lumières, décrochements, saillies 66, prévus sur l'insert 7 et l'âme rigide 13.

Il doit être compris que l'expression « moyens complémentaires d'immobilisation » vise tous les organes, formes, arrangements, agencements prévus sur l'âme rigide 13 et l'insert 7 de sorte à pouvoir coopérer en blocage dans la troisième direction D3, vers le haut.

Dans la réalisation représentée sur les figures, les ergots ou dents 65 sont prévus sur l'insert 7 et les lumières, décrochements, saillies 66, sont prévus sur l'âme rigide 13. En particulier, les lumières, décrochements, saillies 66 sont situés sur l'âme rigide 13 en position médiane entre les faces haute 53 et basse 54.

Dans une autre réalisation, la structure peut être inversée, les ergots ou dents étant prévus sur l'âme rigide 13 et les lumières, décrochements, saillies étant prévus sur l'insert 7.

Il doit être compris que les termes « ergots », « dents », lumières », « décrochements », « saillies » ne sont pas limitatifs et expriment que l'âme rigide 13 et l'insert 7 sont localement déformés de sorte à pouvoir coopérer en blocage dans la troisième direction D3.

Dans la réalisation représentée sur les dessins, les moyens complémentaires d'immobilisation 65, 66 sont de type à déformation élastique et cela tant pour leur montage que pour leur déverrouillage pour dissocier l'élément fonctionnel 2 de l'élément structurel 3.

Dans la réalisation représentée sur les dessins, les faces d'appui conjuguées 60,78 sont le plus proches de partie basse 5 de l'élément fonctionnel 2, tandis que les moyens complémentaires d'immobilisation 65 (ergots, dents) et 66 (lumières, décrochements, saillies) sont le plus éloignées.

Dans la réalisation représentée sur les dessins, les moyens d'immobilisation 65 (ergots, dents) de l'insert 7 sont situés sur le bord libre inférieur de la face extérieure 61 de l'insert 7, par exemple sur les portions 68a. Ce bord libre inférieur et ces portions 68a sont déformables dans la mesure qui permet la coopération des moyens complémentaires d'immobilisation 65 et 66, par déformation élastique lors d'un passage en force au moment du montage de l'élément fonctionnel 2.

Le cas échéant, l'insert 7 comporte une garniture déformable 67 située sur une partie au moins de sa face extérieure 61.

Selon une réalisation, l'écartement dans la première direction D1 des portions 68a de face extérieure 61 de l'insert 7 est légèrement plus petit que l'écartement dans la même direction des portions 62a de face intérieure 62 de la cavité 48. Par suite, il existe un jeu entre les portions de face 68a et 62a, et il est possible de procéder à un léger déplacement relatif dans la première direction D1 de l'insert 7 par rapport à l'âme rigide 13, ce qui participe du rattrapage de dispersion dimensionnelle longitudinale.

Selon une réalisation, l'écartement dans la deuxième direction D2 des portions 68b de face extérieure 61 de l'insert 7 correspond aux tolérances de montage près à l'écartement dans la même direction des portions 62b de face intérieure 62 de la cavité 48, l'insert 7 étant ainsi maintenu dans une position fixe par rapport à l'âme rigide 13 dans la deuxième direction D2.

La prévision de la lumière basse 28, du passage bas 41 et de l'ouverture basse 50 permet l'introduction par dessous d'un outil de déverrouillage des moyens complémentaires d'immobilisation 65 et 66, ce qui permet de dissocier l'élément fonctionnel 2 de l'élément structurel 3, par exemple en vue du remplacement.

## Revendications

1. Assemblage (1) pour - à l'état monté - le support avec filtrage de vibrations d'un élément fonctionnel (2) - comme étant ou comprenant un ventilateur, un échangeur de chaleur, un condenseur - sur un élément structurel (3) rigide étendu dans une première direction (D1) sensiblement horizontale du corps d'un engin - comme un appareil ou un véhicule à moteur -, **caractérisé en ce qu'**il comprend deux ensembles d'assemblage (4) analogues, écartés l'un de l'autre le long de l'élément structurel (3) et de la partie basse (5) de l'élément fonctionnel (2), chaque ensemble d'assemblage (4) étant tel que :
- faisant partie et corps avec l'élément structurel (3), une gaine (8) rigide formée par un ensemble-paroi périphérique (8a) ayant une face intérieure (19) et une face extérieure (20) et formant un espace creux intérieur (21) avec une ouverture (22) située à une extrémité, s'inscrit entre une enveloppe intérieure et une enveloppe extérieure, chacune de forme générale simili-cylindrique, d'axe de première direction (D1), de segment générateur simili-droit et de courbe directrice simili-polygonale, et comprend une paroi haute (23) pourvue d'une lumière haute (24), ayant une face haute extérieure (25) et une face haute intérieure (26), s'étendant dans la première direction (D1) et dans une deuxième direction (D2) sensiblement horizontale et orthogonale à la première direction (D1), ;
- une cassette d'appui et de filtrage de vibrations (9) incluant :
∘ un fourreau extérieur rigide (10) formé par un ensemble-paroi périphérique (10a) ayant une face intérieure (32) et une face extérieure (33) et formant une zone creuse intérieure :
• s'inscrit entre une enveloppe intérieure et une enveloppe extérieure, chacune de forme générale simili-cylindrique, l'enveloppe extérieure étant complémentaire de l'enveloppe intérieure de la gaine (8) de sorte à permettre un coulissement de montage et une immobilisation en position par contact,
• est logé dans l'espace creux et assemblé rigidement à la gaine (8) moyennant un coulissement dans la première direction (D1) et des organes de blocage de fin de course (46a),
• comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
• comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
• comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
∘ l'élément fonctionnel (2) présente en partie basse (5) une face (6) et faisant corps avec elle un insert (7) intégré, globalement rigide, saillant vers le bas dans la troisième direction (D3), traversant la lumière haute (24) et le passage haut (37), supporté par et immobilisé par rapport au noyau central (12) de l'élément intérieur (11), moyennant des faces d'appui conjuguées (60,78) et des moyens complémentaires d'immobilisation (65, 66).

2. Assemblage (1) selon la revendication 1, dans lequel l'insert (7), d'axe de troisième direction (D3), a une face extérieure (61) coopérant avec la face intérieure (62) de la cavité (48) du noyau central (12), l'insert (7) étant supporté par une âme rigide (13) du noyau central (12) grâce à des faces d'appui conjuguées (60,78) prévues respectivement sur la face extérieure (61) de l'insert (7) et sur la face intérieure (62) de la partie centrale creuse (55) de l'âme rigide (13), et dans lequel l'insert (7) est immobilisé par rapport à l'âme rigide (13) grâce à des moyens complémentaires d'immobilisation, comme des ergots ou des dents (65) et des lumières, décrochements, saillies (66), prévus sur l'insert (7) et l'âme rigide (13).

3. Assemblage (1) selon l'une des revendications 1 et 2, dans lequel la gaine (8) comprend une paroi basse (27) pourvue d'une lumière basse (28), le fourreau (10) comprend une paroi basse (40) pourvue d'un passage bas (41) homologue de la lumière basse (28), la cavité (48) est ouverte de part en part avec une ouverture haute (49) et une ouverture basse (50).

4. Assemblage (1) selon l'une des revendications 1 à 3, dans lequel la cassette (9) est immobilisée en position par contact sur la gaine (8) avec des zones complémentaires conjuguées de la cassette (9) et de la gaine (8) comprenant des parties saillantes et/ou des parties découpées conjuguées.

5. Cassette d'appui et de filtrage de vibrations (9) faisant partie d'un assemblage (1) selon l'une des revendications 1 à 4 comprenant deux ensembles d'assemblage (4) analogues, écartés l'un de l'autre le long de l'élément structurel (3) et de la partie basse (5) de l'élément fonctionnel (2),
- comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
- comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
- comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
- l'élément fonctionnel (2) présente en partie basse (5) une face (6) et faisant corps avec elle un insert (7) intégré, globalement rigide, saillant vers le bas dans la troisième direction (D3), traversant la lumière haute (24) et le passage haut (37), supporté par et immobilisé par rapport au noyau central (12) de l'élément intérieur (11), moyennant des faces d'appui conjuguées (60,78) et des moyens complémentaires d'immobilisation (65, 66).
incluant :
- un fourreau extérieur rigide (10) formé par un ensemble-paroi périphérique (10a) ayant une face intérieure (32) et une face extérieure (33) et formant une zone creuse intérieure, s'inscrit entre une enveloppe intérieure et une enveloppe extérieure, chacune de forme générale simili-cylindrique, et comprend une paroi haute (36) avec une face haute extérieure (38) et une face haute intérieure (39),
- un élément intérieur (11), au moins pour partie élastiquement déformable, logé dans la zone creuse et porté par le fourreau (10):
∘ comprend un noyau central (12) qui, en réponse à des sollicitations dans la troisième direction (D3) inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée, et, d'autre part, une cavité (48) avec une ouverture haute (49),
∘ comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
∘ comprend également des faces d'appui (78) et des moyens d'immobilisation (66), aptes à coopérer avec des faces d'appui conjuguées (60) et des moyens d'immobilisation (65) d'un insert (7) intégré de l'élément fonctionnel (2).

6. Cassette d'appui et de filtrage de vibrations (9) selon la revendication 5, dans laquelle la face intérieure (62) de la cavité (48) du noyau central (12) est apte à coopérer avec une face extérieure (61) de l'insert (7) et comporte des faces d'appui (78) ; et dans laquelle la face intérieure (62) de la cavité (48) du noyau central (12) est apte à immobiliser une face extérieure (61) de l'insert (7) et comporte des lumières, décrochements, saillies (66).

7. Cassette d'appui et de filtrage de vibrations (9) selon l'une des revendications 5 et 6, dans laquelle les moyens d'immobilisation 66 sont de type à déformation élastique pour le montage et pour le déverrouillage.

8. Cassette d'appui et de filtrage de vibrations (9) selon l'une des revendications 5 à 7, dans laquelle le fourreau extérieur (10) comporte sur sa face extérieure (33) des parties saillantes localisées, saillant vers l'extérieur, plus spécialement des parties saillantes localisées s'étendant dans la première direction (D1), propres à un coulissement de montage avec ajustement de la cassette (9) par rapport à la gaine (8) de l'élément structurel (3).

9. Cassette d'appui et de filtrage de vibrations (9) selon l'une des revendications 5 à 8, dans laquelle le fourreau extérieur (10) comporte des organes de blocage de fin de course (46a), dans la première direction (D1), par rapport à la gaine (8) de l'élément structurel (3), sous la forme de redans saillants localisés, saillant vers l'extérieur de la face extérieure (33), disposés globalement dans un premier plan (P1) orthogonal à la première direction (D1).

10. Cassette d'appui et de filtrage de vibrations (9) selon l'une des revendications 5 à 9, dans laquelle le noyau central (12) de l'élément intérieur (11) comporte :
- une âme rigide (13) ayant :
∘ une partie centrale creuse (55) de sorte à former et à limiter la cavité (48) de l'élément intérieur (11) et son ouverture haute (49), et
∘ deux ailes (15) disposées de part et d'autre de la partie centrale creuse (55) et s'étendant dans la première direction (D1) comportant deux faces d'extrémité,
- une garniture périphérique (14), élastiquement déformable, comportant les parties déformables élastiquement (47) conformées vers l'extérieur, recouvrant l'âme rigide (13), à l'exception d'une partie au moins de ses faces d'extrémité.

11. Cassette d'appui et de filtrage de vibrations (9) selon l'une des revendications 5 à 10, dans laquelle les ailes (15) de positionnement, support, filtrage et rattrapage des dispersions dimensionnelles de l'élément intérieur (11) sont attenantes aux faces latérales (51) du noyau (12) et soit se déploient de sorte à avoir une projection orthogonale substantielle sur un troisième plan (P3) orthogonal à la troisième direction (D3) soit se déploient dans un plan incliné sur le troisième plan (P3) de sorte à être rigidement associées aux deux parois latérales (44) du fourreau (10).

12. Cassette d'appui et de filtrage de vibrations (9) selon l'une des revendications 5 à 11, dans laquelle les ailes (15) de positionnement, support, filtrage et rattrapage des dispersions dimensionnelles sont situées le long de la première direction (D1), de façon continue.

## Patentansprüche

1. Anordnung (1), die im montierten Zustand zur schwingungsdämpfenden Abstützung eines Funktionselements (2)
- wie z.B. eines Ventilators, Wärmetauschers, Kondensators oder Baugruppen mit diesen Elementen - an einem starren Strukturelement (3) dient, welches sich in einer ersten, im wesentlichen horizontalen Richtung (D1) des Körpers einer Maschine - wie z.B. eines Geräts oder Kraftfahrzeuges - erstreckt, **dadurch gekennzeichnet, dass** sie zwei gleichartige Montagebaugruppen (4) umfasst, die entlang des Strukturelements (3) und des unteren Teils (5) des Funktionselements (2) zueinander beabstandet sind, wobei jede Montagebaugruppe (4) so beschaffen ist, dass:
- sie Teil des Strukturelements (3) ist und mit diesem eine Einheit bildet, wobei eine starre Hülle (8), die durch eine Umfangswandanordnung (8a) mit einer Innenseite (19) und einer Außenseite (20) gebildet wird und einen inneren Hohlraum (21) mit einer Öffnung (22) an einem Ende bildet, von einem Innen- und einem Außenmantel abgegrenzt wird, mit jeweils generell simulierter zylindrischer Form, einem Achsenverlauf in der ersten Richtung (D1), einem simulierten geraden Erzeugungssegment und einer simulierten polygonalen Leitkurve, und eine obere Wand (23) umfasst, die mit einer oberen Öffnung (24) versehen ist, und eine obere Außenfläche (25) und eine obere Innenfläche (26) aufweist, die sich in der ersten Richtung (D1) sowie in einer zweiten Richtung (D2), im Wesentlichen horizontal und rechtwinklig zur ersten Richtung (D1) verlaufenden Richtung erstrecken;;
- eine stützende, schwingungsdämpfende Kassette (9) mit:
∘ einer starren äußeren Hülse (10), die durch eine Umfangswandanordnung (10a) mit einer Innenfläche (32) und einer Außenfläche (33) gebildet wird und einen inneren hohlen Bereich bildet:
• von einem Innenmantel und einem Außenmantel abgegrenzt wird, die jeweils eine generell simulierte zylindrische Form haben, wobei der Außenmantel komplementär zum Innenmantel der Hülle (8) ist, um ein sowie durch Kontakt eine Feststellung Gleiten des Aufbaus zu ermöglichen,
• in dem Hohlraum sitzt und durch Verschiebung in der ersten Richtung (D1) und Endlagenverriegelungselemente (46a) starr mit der Hülle (8) verbunden ist,
• eine obere Wand (36) mit einer oberen Außenfläche (38) und einer oberen Innenfläche (39), als Gegenstück zur oberen Wand (23) der Hülle (8) umfasst und als Gegenstück zur oberen Öffnung (24) mit einem oberen Durchgang (37) versehen ist,
∘ einem Innenelement (11), das zumindest teilweise elastisch verformbar ist, im hohlen Bereich sitzt, von der Hülse (10) getragen wird und:
• einen zentralen Kern (12) umfasst, der als Reaktion auf die Beanspruchungen unterhalb einer bestimmten Obergrenze in einer dritten, im Wesentlichen vertikalen Richtung (D3) in den hohlen Bereich verschoben wird, wobei er von der Innenfläche (32) der Hülse (10) beabstandet bleibt, und der einerseits elastisch verformbare, nach außen ausgebildete Teile (47) umfasst, die zur Filterung beitragen, und als Reaktion auf Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37),
• außerdem Flügel (15) umfasst zum Positionieren, Stützen, Schwingungsdämpfen und Ausgleichen von Maßdifferenzen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten (D1), zweiten (D2) und dritten (D3) Richtung elastisch verformbar sind;
∘ das Funktionselement (2) weist im unteren Teil (5) eine Fläche (6) auf und bildet eine Einheit mit einem integrieren, generell starren Einsatz (7), der in der dritten Richtung (D3) nach unten vorspringt, durch die obere Öffnung (24) und den oberen Durchgang (37) führt und von dem zentralen Kern (12) des inneren Elements (11) gestützt mittels passender Auflageflächen (60, 78) und komplementärer Feststellmittel (65, 66) festgestellt wird.

2. Anordnung (1) nach Anspruch 1, in welcher der Einsatz (7) mit einem Achsenverlauf in der dritten Richtung (D3) eine Außenfläche (61) aufweist, die mit der Innenfläche (62) des Hohlraums (48) des zentralen Kerns (12) zusammenwirkt, wobei der Einsatz (7) durch einen starren Kern (13) des zentralen Kerns (12) mittels passender Auflageflächen (60, 78) gestützt wird, die jeweils an der Außenfläche (61) des Einsatzes (7) und an der Innenfläche (62) des hohlen Mittelteils (55) des starren Kerns (13) vorgesehen sind, und in welcher der Einsatz (7) relativ zum starren Kern (13) mittels komplementärer, auf dem Einsatz (7) und dem starren Kern (13) vorgesehener Feststellmittel festgestellt wird.

3. Anordnung (1) nach einem der Ansprüche 1 und 2, in welcher die Hülle (8) eine mit einer Bodenöffnung (28) versehene Bodenwand (27) umfasst, die Hülse (10) eine Bodenwand (40) umfasst, die mit einem Bodendurchgang (41) als Gegenstück zur Bodenöffnung (28) versehen ist, und der Hohlraum (48) zu beiden Seiten durch eine obere Öffnung (49) und eine untere Öffnung (50) geöffnet ist.

4. Anordnung (1) nach einem der Ansprüche 1 bis 3, in der die Kassette (9) auf der Hülle (8) durch Kontakt passender komplementärer Bereiche mit passenden Vorsprüngen und/oder Aussparungen von Kassette (9) und Hülle (8) festgestellt wird.

5. Stützende, schwingungsdämpfende Kassette (9), die Teil einer Anordnung (1) nach einem der Ansprüche 1 bis 4 ist, mit zwei gleichartigen Montagebaugruppen (4), die entlang des Strukturelements (3) und des unteren Teils (5) des Funktionselements (2) zueinander beabstandet sind, und die
- eine obere Wand (36) umfasst mit einer oberen Außenfläche (38) und einer oberen Innenfläche (39) als Gegenstück zur oberen Wand (23) der Hülle (8), die mit einem oberen Durchgang (37) als Gegenstück zur oberen Öffnung (24) versehen ist;
∘ ein Innenelement (11), das zumindest teilweise elastisch verformbar ist, im hohlen Bereich sitzt und von der Hülse (10) getragen wird:
- umfasst einen zentralen Kern (12), der als Reaktion auf die Beanspruchungen in einer dritten, im Wesentlichen vertikalen Richtung (D3) unterhalb einer bestimmten Obergrenze in den hohlen Bereich verschoben wird, wobei er von der Innenfläche (32) der Hülse (10) beabstandet bleibt, und einerseits elastisch verformbare, nach außen ausgebildete Teile (47) umfasst, die zur Schwingungsdämpfung beitragen, und als Reaktion auf die Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37),
- umfasst außerdem Flügel (15) zum Positionieren, Stützen, Schwingungsdämpfen und Ausgleichen von Maßdifferenzen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten Richtung (D3) elastisch verformbar sind;
- das Funktionselement (2) weist im unteren Teil (5) eine Fläche (6) auf und bildet eine Einheit mit einem integrierten, generell starren Einsatz, der in der dritten Richtung (D3) nach unten vorspringt, durch die obere Öffnung (24) und den oberen Durchgang (37) führt, vom inneren Element (11) gestützt und in Bezug auf den zentralen Kern (12) festgestellt wird mittels passender Auflageflächen (60, 78) und komplementärer Feststellmittel (65, 66).
Die folgendes beinhaltet:
- eine starre äußere Hülse (10), die durch eine Umfangswandanordnung (10a) mit einer Innenfläche (32) und einer Außenfläche (33) gebildet wird und einen inneren hohlen Bereich bildet, von einem Innenmantel und einem Außenmantel mit jeweils generell simulierter zylindrischer Form abgegrenzt wird und eine obere Wand (36) mit einer oberen Außenfläche (38) und einer oberen Innenwand (39) umfasst,
- ein zumindest teilweise elastisch verformbares Innenelement (11), das in dem hohlen Bereich sitzt und von der Hülse (10) getragen wird:
∘ umfasst einen zentralen Kern (12), der als Reaktion auf die Beanspruchungen in einer dritten Richtung (D3) unterhalb einer bestimmten Obergrenze in den hohlen Bereich verschoben wird, wobei er von der Innenfläche (32) der Hülse (10) beabstandet bleibt, und der einerseits elastisch verformbare, nach außen ausgebildete Teile (47) umfasst, die zur Schwingungsdämpfung beitragen, und als Reaktion auf die Beanspruchungen in der dritten Richtung (D3), die diese bestimmte Obergrenze überschreiten, in Anschlag kommen kann, und andererseits einen Hohlraum (48) mit einer oberen Öffnung (49) umfasst,
o umfasst außerdem Flügel (15) zum Positionieren, Stützen, Schwingungsdämpfen und Ausgleichen von Maßdifferenzen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten (D3) Richtung elastisch verformbar sind,
∘ umfasst außerdem Auflageflächen (78) und Feststellmittel (66), die mit den passenden Auflageflächen (60) und den Feststellmitteln (65) eines Einsatzes (7) des Funktionselements (2) zusammenwirken können.

6. Stützende, schwingungsdämpfende Kassette (9) nach Anspruch 5, in der die Innenfläche (62) des Hohlraums (48) des zentralen Kerns (12) mit einer Außenfläche (61) des Einsatzes (7) zusammenwirken kann und Auflageflächen (78) umfasst; und in der die Innenfläche (62) des Hohlraums (48) des zentralen Kerns (12) eine Außenfläche (61) des Einsatzes (7) feststellen kann und Öffnungen, Absätze und Vorsprünge (66) umfasst.

7. Stützende, schwingungsdämpfende Kassette (9) nach einem der Ansprüche 5 und 6, in der die Feststellmittel 66 zwecks Montage und Entriegelung elastisch verformbar sind.

8. Stützende, schwingungsdämpfende Kassette (9) nach einem der Ansprüche 5 bis 7, in welcher die äußere Hülse (10) an ihrer Außenfläche (33) vereinzelt, nach außen vorstehende Partien umfasst, und insbesondere vereinzelte vorspringende Partien, die sich in die erste Richtung (D1) erstrecken wie ein gleitender Aufbau mit Anpassung der Kassette (9) an die Hülle (8) des Strukturelements (3).

9. Stützende, schwingungsdämpfende Kassette (9) nach einem der Ansprüche 5 bis 8, in welcher die äußere Hülse (10) in der ersten Richtung (D1), bezogen auf die Hülle (8) des Strukturelements (3), Endlagenverriegelungselemente (46a) in Form von vereinzelten, von der Außenfläche (33) nach außen vorstehenden Vorsprüngen aufweist, die insgesamt in einer ersten Ebene (P1) rechtwinklig zur ersten Richtung (D1) angeordnet sind.

10. Stützende, schwingungsdämpfende Kassette (9) nach einem der Ansprüche 5 bis 9, wobei der zentrale Kern (12) des Innenelements (11) folgendes umfasst:
einem starren Kern (13) mit:
∘ einem hohlen Mittelteil (55), um den Hohlraum (48) des inneren Elements (11) und dessen obere Öffnung (49) zu bilden und zu begrenzen, und
∘ zwei Flügel (15), die zu beiden Seiten des hohlen Mittelteils (55) angeordnet sind, sich in der ersten Richtung (D1) erstrecken und zwei Endflächen aufweisen,
- eine umlaufende, elastisch verformbare Dichtung (14) mit nach außen ausgebildeten, elastisch verformbaren Teilen (47), die den starren Kern (13) bis auf mindestens einen Teil seiner Endflächen bedecken.

11. Stützende, schwingungsdämpfende Kassette (9) nach einem der Ansprüche 5 bis 10, in welcher die Flügel (15) zum Positionieren, Stützen, Schwingungsdämpfen und Ausgleichen der Maßabweichungen des inneren Elements (11) an die Seitenflächen (51) des Kerns (12) angrenzen und sich entweder so erstrecken, dass sie eine im Wesentlichen Orthogonalprojektion auf eine dritte Ebene (P3) rechtwinklig zur dritten Richtung (D3) bilden, oder sie sich in einer zur dritten Ebene (P3) geneigten Ebene erstrecken, so dass sie starr mit den beiden Seitenwänden (44) der Hülse (10) verbunden sind.

12. Stützende, schwingungsdämpfende Kassette (9) nach einem der Ansprüche 5 bis 11, in welcher die Flügel (15) zum Positionieren, Stützen, Schwingungsdämpfen und Ausgleichen von Maßabweichungen kontinuierlich entlang der ersten Richtung (D1) angeordnet sind.

## Claims

1. An assembly (1) for - in the assembled state - the vibration-filtering support of a functional element (2) - as being or comprising a fan, a heat exchanger, a condenser - on a rigid structural element (3) extended in a first substantially horizontal direction (D1) of the body of a machine - as an apparatus or a motor vehicle -, which comprises two similar assembly sets (4) spaced apart from each other along the structural element (3) and the lower part (5) of the functional element (2), each assembly (4) being such that:
- it is part and integral with the structural element (3), a rigid sleeve (8) formed by a peripheral wall assembly (8a) having an inner face (19) and an outer face (20) and forming an inner hollow space (21) with an opening (22) located at one end, lies between an inner envelope and an outer envelope, each of general near-cylindrical shape, in first direction axis (D1), with a near-straight generating segment and a near-polygonal guide curve, and comprises a high wall (23) provided with an upper opening (24), having an outer upper face (25) and an inner upper face (26), extending in the first direction (D1) and in a second direction (D2) substantially horizontal and orthogonal to the first direction (D1);
- a support and vibration-filtering cassette (9) including:
∘ a rigid outer sheath (10) formed by a peripheral wall assembly (10a) having an inner face (32) and an outer face (33) and forming an inner hollow space:
• located between an inner envelope and an outer envelope, each of which is generally similar in shape to a cylinder, the outer envelope being complementary to the inner envelope of the sleeve (8) so as to allow the slidingly mounting and immobilization in position by contact,
• housed in the cavity and rigidly connected to the sleeve (8) by sliding in the first direction (D1) and end of stroke blocking members (46a),
• comprising a high wall (36) with an outer upper face (38) and an inner upper face (39), homologous to the upper wall (23) of the sleeve (8), provided with a high passage (37) homologous to the upper opening (24),
∘ an inner element (11), at least in part elastically deformable, housed in the hollow space and carried by the sheath (10):
• comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37),
• also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
∘ the functional element (2) has in its lower part (5) a face (6) and forming part with it an integral insert (7), generally rigid, projecting downwards in the third direction (D3), passing through the upper opening (24) and the upper passage (37), supported by and immobilized with respect to the central core (12) of the inner element (11), by means of conjugated support faces (60, 78) and additional immobilization means (65, 66).

2. Assembly (1) according to claim 1, wherein the insert (7), of third direction axis (D3), has an outer face (61) cooperating with the inner face (62) of the cavity (48) of the central core (12), the insert (7) being supported by a rigid core (13) of the central core (12) by means of conjugated support faces (60, 78) provided respectively on the outer face (61) of the insert (7) and on the inner face (62) of the hollow central space (55) of the rigid core (13), and wherein the insert (7) is immobilized with respect to the rigid core (13) by means of additional immobilization means, such as lugs or teeth (65) and openings, recesses, protrusions (66), provided on the insert (7) and the rigid core (13).

3. Assembly (1) according to one of claims 1 to 2, wherein the sleeve (8) comprises a lower wall (27) provided with a low opening (28), the sheath (10) comprises a lower wall (40) provided with a low passage (41) homologous to the low opening (28), the cavity (48) is open through with an upper opening (49) and a lower opening (50).

4. Assembly (1) according to one of claims 1 to 3, wherein the cassette (9) is immobilized in position by contact with the sleeve (8) with conjugated complementary areas of the cassette (9) and the sheath (8) comprising protruding parts and/or conjugated cut-out parts.

5. Support and vibration-filtering cassette (9) being part of an assembly (1) according to one of claims 1 to 4 comprising two analogous assembly sets (4), spaced apart along the structural element (3) and the lower part (5) of the functional element (2),
- comprising a high wall (36) with an outer upper face (38) and an inner upper face (39), homologous to the upper wall (23) of the sleeve (8), provided with a high passage (37) homologous to the upper opening (24),
∘ an inner element (11), at least in part elastically deformable, housed in the hollow space and carried by the sheath (10):
- comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37),
- also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
- the functional element (2) has in its lower part (5) a face (6) and forming part with it an integral insert (7), generally rigid, projecting downwards in the third direction (D3), passing through the upper opening (24) and the upper passage (37), supported by and immobilized with respect to the central core (12) of the inner element (11), by means of conjugated support faces (60, 78) and additional immobilization means (65, 66).
including:
a rigid outer sheath (10) formed by a peripheral wall assembly (10a) having an inner face (32) and an outer face (33) and forming an inner hollow area, lying between an inner envelope and an outer envelope, each of general near-cylindrical shape, and comprising an upper wall (36) with an outer upper face (38) and an inner upper face (39), an inner element (11), at least partially elastically deformable, housed in the hollow area and carried by the sheath (10):
∘ including a central core (12) which, in response to stresses in the third direction (D3) below a given limit, is moved into the hollow area away from the inner face (32) of the sheath (10), and which includes, on the one hand, elastically deformable parts (47), shaped outwards, capable of contributing to the filtering and, in response to stresses in the third direction (D3) exceeding said given limit, come to a stop, and, on the other hand, a cavity (48) with an upper opening (49),
∘ also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
∘ also including support faces (78) and immobilization means (66), capable of cooperating with conjugated support faces (60) and immobilization means (65) of an integrated insert (7) of the functional element (2).

6. Support and vibration-filtering cassette (9) according to claim 5, wherein the inner face (62) of the cavity (48) of the central core (12) is adapted to cooperate with an outer face (61) of the insert (7) and comprises support faces (78); and wherein the inner face (62) of the cavity (48) of the central core (12) is adapted to immobilize an outer face (61) of the insert (7) and has openings, recesses, protrusions (66).

7. Support and vibration-filtering cassette (9) according to one of claims 5 and 6, wherein the immobilization means 66 is of the elastic deformation type for mounting and unlocking.

8. Support and vibration-filtering cassette (9) according to one of claims 5 to 7, in which the outer sheath (10) has on its outer side (33) localised protruding parts projecting outwards, more especially localised protruding parts extending in the first direction (D1), suitable for the slidingly mounting and adjustment of the cassette (9) with respect to the sleeve (8) of the structural element (3).

9. Support and vibration-filtering cassette (9) according to one of claims 5 to 8, wherein the outer sheath (10) has end of stroke blocking members (46a), in the first direction (D1), relative to the sleeve (8) of the structural element (3), in the form of localized protrusions, projecting outwards from the outer face (33), arranged globally in a first plane (P1) orthogonal to the first direction (D1).

10. Support and vibration-filtering cassette (9) according to one of claims 5 to 9, wherein the central core (12) of the inner member (11) comprises:
a rigid core (13) having:
∘ a hollow central part (55) so as to form and limit the cavity (48) of the inner element (11) and its upper opening (49), and
∘ two wings (15) arranged on either side of the hollow central space (55) and extending in the first direction (D1), having two end faces,
- an elastically deformable peripheral trim (14), comprising the elastically deformable parts (47) shaped outwards, covering the rigid core (13), with the exception of at least part of its end faces.

11. Support and vibration-filtering cassette (9) according to one of claims 5 to 10, in which the wings (15) for positioning, supporting, filtering and catching up dimensional dispersions of the inner element (11) are adjacent to the lateral faces (51) of the core (12) and either extend so as to have a substantial orthogonal projection on a third plane (P3) orthogonal to the third direction (D3) or extend in a plane tilted with respect to the third plane (P3) so as to be rigidly associated with the two lateral walls (44) of the sheath (10).

12. Support and vibration-filtering cassette (9) according to one of claims 5 to 11, wherein the wings (15) for positioning, supporting, filtering and catching up dimensional dispersions are located continuously along the first direction (D1).
